# EUROPÄISCHE PATENTSCHRIFT

(11) **EP 1 495 104 B1**
(45) Veröffentlichungstag und Bekanntmachung des Hinweises auf die Patenterteilung: **06.08.2008**
(21) Anmeldenummer: 03712126.6
(22) Anmeldetag: 02.04.2003
(51) Int. Cl.: C12H 1/04, B01D 37/02

(54) **VERWENDUNG VON POLYMERISATEN, ENTHALTEND THERMOPLASTISCHE POLYMERE ALS FILTERHILFS- UND/ODER STABILISIERUNGSMITTEL**
USE OF POLYMERS COMPRISING THERMOPLASTIC POLYMERS AS FILTRATION AIDS AND/OR STABILISING AGENT
UTILISATION DE POLYMERISATS CONTENANT DES POLYMERES THERMOPLASTIQUES COMME ADJUVANTS DE FILTRAGE ET/OU STABILISANTS

(30) Priorität: 05.04.2002 DE 10215147
(43) Veröffentlichungstag der Anmeldung: 12.01.2005
(73) Patentinhaber: BASF SE, 67056 Ludwigshafen (DE)
(72) Erfinder: DROHMANN, Christian, 2930 Brasschaat (BE); PETSCH, Tobias, 55758 Mörschied (DE); KESSLER, Thomas, 67105 Schifferstadt (DE); MÜLLER, Frank, 67069 Ludwigshafen (DE); HAMM DE BANTLEON, Elisa, 80634 München (DE); MATHAUER, Klemens, 69115 Heidelberg (DE)
(86) Internationale Anmeldenummer: PCT/EP2003/003439
(87) Internationale Veröffentlichungsnummer: WO 2003/084639

(56) Entgegenhaltungen:
- WO-A-96/35497
- GB-A- 1 436 466
- US-A- 4 344 846
- US-A- 4 436 755
- US-A- 5 856 429

## Beschreibung

Die vorliegende Erfindung betrifft die Verwendung von Polymerisaten, enthaltend thermoplastische Polymere als Filterhilfs- und/oder Stabilisierungsmittel für die Filtration bzw. Stabilisierung von wässrigen Flüssigkeiten.

Die Trennung von fest-flüssigen Stoffgemischen über Filtration ist in vielen industriellen Produktionsprozessen ein wichtiger Verfahrensschritt. Unter dem Begriff Filterhilfsmittel versteht man eine Reihe von Produkten, die in loser, pulvriger, granulierter oder faseriger Form als Anschwemmmaterial in der Filtration eingesetzt wird.

Filterhilfsmittel kann man vor Beginn der Filtration als Filterhilfsschicht (Anschwemmfilter) auf das Filterhilfsmittel aufbringe, um einen lockeren Kuchenaufbau zu erzielen, oder kontinuierlich der zu filternden Trübe zusetzen.

Bekannte Filtrierzusatzstoffe sind beispielsweise Diatomeen, Naturalprodukte, die aus der Kalzinierung von Diatomit hervorgehen. Die Hauptbestandteile sind amorphe SiO₂ - Modifikationen, begleitet von Oxiden des Aluminiums, Eisens und anderer Elemente sowie deren silikatische Verbindungen. Perlite sind geglühte, gemahlene selektierte Blähtone vulkanischen Ursprungs (Rhyolite). Die Struktur ist blättchenförmig und chemisch als ein Natrium-, Kalium-, Aluminium-Silikat zu beschreiben. Bentonite sind Tonmineralien mit einer hohen Quell- und Absorptionsfähigkeit.

Filterhilfsstoffe sollten während der Filtration ein poröses Milieu bilden, dass die zu beseitigenden Unreinheiten aufnimmt und den Abfluss der flüssigen Phase erleichtert.

Die Zusatzstoffe sollten eine erhöhte Porosität haben und sollten sich auch unter Druckeinfluss nicht verformen. Außerdem sollten die Stoffe chemisch inert und leicht zurückgewinnbar sein.

Für das Filtrieren von Bier werden gegenwärtig überwiegend Kieselgur-Anschwemm- sowie Schichtenfilter benutzt. Bei der Anschwemmfiltration wird vor Filtrationsbeginn auf einer Stützfläche (Filtergebe) eine Kieselgur-Vorschicht angeschwemmt. Nach Anschwemmen dieser Vorschicht wird dem zu filtrierenden Bier (Unfiltrat) ein Gemisch aus feiner und grober Kieselgur zudosiert. Bei der Bierproduktion muss mit einem Kieselgurverbrauch von 150 bis 200 g/hl Bier gerechnet werden. Für die Anschwemmfiltration hat sich Kieselgur besonders wegen seines großen Porenvolumens, seines niedrigen Schüttgewichtes, seiner höheren Saugfähigkeit und seiner großen spezifischen Oberfläche bewährt.

Ein Nachteil bei der Verwendung von Kieselgur ist, dass es nach einer Anzahl von Filterbetriebsstunden durch zurückgehaltenes Feststoffmaterial in seiner Wirksamkeit verbraucht ist und von den Stützflächen der Filter entfernt und ausgetauscht werden muss.

Das Deponieren des verbrauchten Kieselgurs ist aufgrund gesetzlicher Vorschriften nur mit großen Schwierigkeiten und Kostenaufwand möglich. Versuche, das als Filtermaterial unbrauchbare Kieselgur zu regenerieren erwiesen sich als in der Praxis nicht durchführbar. Zusätzlich ist Kieselgur seit einiger Zeit wegen seiner eventuell krebserzeugenden Wirkung in Diskussion.

Auch die Abtrennung von Trübung verursachenden Substanzen wie gelösten Polyphenolen oder Proteinen ist in vielen Getränkeproduktionsprozessen ein wichtiger Verfahrensschritt, weil die Entfernung dieser Stoffe zu einer längeren Haltbarkeit der Getränke führt.

Die Stabilisierung kann durch die Zugabe von Stoffen erfolgen, die die Trübung verursachenden Substanzen binden, fällen oder in sonst geeigneter Weise aus dem Medium entfernen. Zu diesen Stoffen gehören z.B. das Kieselgel, das Proteine bindet bzw. fällt, oder Polyvinylpyrrolidon, das Polyphenole bindet.

Bislang werden Filterhilfsmittel und Stabilisierungsmittel getrennt oder zusammen eingesetzt. Im ersten Fall bedeutet dies jedoch apparativen Aufwand im zweiten Fall ist die gemeinsame Entsorgung problematisch, zudem ist es bei den bisher eingesetzten Stoffen nicht möglich die Adsorption zu regulieren.

EP 351 363 beschreibt hochvernetzte Polyvinylpolypyrrolidone (PVPP) als Stabilisierungs- und Filterhilfsmittel. Bei der Verwendung von Polyvinylpolypyrrolidon allein ist es jedoch schwierig, die Adsorption einzustellen.

In US 4344846 wird eine Methode zur Anschwemmfiltration mit Filterhilfsmitteln auf Basis expandierten Polystyrols beschrieben.

WO 96/35497 beschreibt regenerierbare Filterhilfsmittel für die Filtration eines flüssigen Mediums, insbesondere Bier, die Körnchen synthetischer oder natürlicher Polymere umfassen, die einen Filterkuchen mit einer Porosität zwischen 0,3 und 0,5 bilden.

Aufgabe der vorliegenden Erfindung war es ein Filterhilfs- bzw. Stabilisierungsmittel bereitzustellen, dass anstelle von Kieselgur bei der Filtration bzw. Stabilisierung von wässrigen Flüssigkeiten, insbesondere in der Bier- und Getränkeherstellung verwendet werden kann. Es sollte sowohl als Filterhilfsmittel als auch als Stabilisierungsmittel allein aber auch sowohl als auch für beide Funktionen einsetzbar sein. Es sollte unlöslich und nur wenig quellbar, chemisch inert und oberflächenreich sein, sowie einfach und in akzeptablen Reaktionszeiten herstellbar sein. Weiterhin sollte es möglich sein, die Adsorption gezielt einzustellen und es sollte regenerierbar sein.

Gegenstand der Erfindung ist gemäß Anspruch 1 ein Verfahren zur Filtration und/oder Stabilisierung einer wässrigen Flüssigkeit, dadurch gekennzeichnet, dass man ein Polymerisat als Filterhilfs- bzw. Stabilisierungsmittel enthaltend
(a) 20 bis 95 Gew.-% mindestens eines thermoplastischen Polymers aus der Gruppe der Polyolefine und Polyamides
(b) 80 bis 5 Gew.-% mindestens eines weiteren Stoffes, ausgewählt aus der Gruppe der Silikate, Carbonate, Oxide, Kieselgel, Kieselgur, Diatomeenerde, der vernetzten Polyvinyllactame oder Gemischen davon,

als Filterhilfes- bzw. Stabilisierungsmittel einsetzt, wobei die Polymerpulver durch Compoundieren der thermoplastischen Polymere (a) und der weiteren Stoffe (b) in einem Extruder und anschließendem Zurkleinern erhalten werden.

Das Verfahren kann dabei so ausgeführt werden, dass nur jeweils eine Filtration oder eine Stabilisierung des wässrigen Mediums stattfindet, oder aber, dass neben der Filtration eine gleichzeitige Stabilisierung erfolgt. Bevorzugt findet neben der Filtration auch eine Stabilisierung statt.

Bei der Filtration wird bevorzugt die Technik der Anschwemmfiltration verwendet.

Überraschenderweise lässt sich durch die Polymerisate die Adsorption beispielsweise der die Trübung in Getränken verursachenden Inhaltsstoffe gezielt einstellen.

Werden, z.B. im Falle von Bier die darin enthaltenen Polyphenole komplett entfernt, verliert das Bier dadurch auch seine Geschmacksstoffe.

Ein weiterer Vorteil der Verwendung der Polymerisate ist ihre Regenerierbarkeit.

Unter den unter (a) genannten thermoplastischen Polymeren versteht man amorphe unvernetzte und teilkristalline unvernetzte Polymere. Sie sind schmelzbar und können durch Extrusion, Spritzguss oder im Spinnverfahren verarbeitet werden. In organischen Lösungsmitteln sind sie oft löslich. Sie enthalten sowohl kristalline als auch amorphe Bereiche. Die Makromolekülketten gehen dabei durch mehrere Bereiche und stellen so den Zusammenhalt des Polymers her (s.a. Handbuch der Technischen Polymerchemie, A. Echte, 1. Aufl., 1993, VCM, Weinheim). Gemäß der Erfindung verwendet man darunter Polyolefine, oder Polyamide.

Bevorzugt versteht man unter den teilkristallinen Thermoplasten Polyethylen, Polyoxymethylen oder Polypropylen.
Unter den amorphen Thermoplasten versteht man bevorzugt Polyvinylchlorid oder Polymethacrylat.

Die thermoplastischen Polymere (a) werden im Rahmen der Erfindung in Mengen von 20 bis 95 Gew.-%, bevorzugt 40 bis 90 Gew.-%, insbesonders bevorzugt 60 bis 90 Gew.-%, bezogen auf die Gesamtmenge des Filterhilfsstoffes, eingesetzt.

Unter den Carbonaten unter (b) versteht man Alkali- oder Erdalkalicarbonate, Alkali- oder Erdalkalihydrogencarbonate, bevorzugt Kalziumcarbonat, Natriumhydrogencarbonat oder Kaliumhydrogencarbonat. Unter den Oxiden versteht man Oxide oder Mischoxide der 4. Nebengruppe oder der 3. Hauptgruppe, bevorzugt Titanoxid oder Aluminiumoxid.

Unter den Silikaten versteht man sonstige nicht ausdrücklich vorher genannte natürliche und künstliche Silikate; dazu gehören auch Mischsilikate wie Alumosilikate oder auch Zeolithe.

Als weitere Polymere unter (b) werden vernetztes Polyvinyllactam eingesetzt. Als Polyvinyllactam sind bevorzugt: Polyvinylpyrrolidon, und Polyvinylcaprolactam. Besonders bevorzugt wird hochvernetztes Polyvinylpolypyrrolidon, beispielsweise das unter dem Markennamen erhältliche Divergan^{®} F eingesetzt.

Dieses wird üblicherweise durch die sogenannte Popcornpolymerisation erhalten. Dabei handelt es sich um eine Polymerisationsmethode, bei der die wachsenden Polymerketten miteinander vernetzen. Dies kann in An- oder Abwesenheit eines Vernetzers geschehen.

Vernetzer sind Verbindungen, die mindestens zwei ethylenisch ungesättigte nichtkonjugierte Doppelbindungen im Molekül erhalten. Bevorzugte Vernetzer sind Divinylbenzol, N,N'-Divinylethylenharnstoff, N,N'-Divinylpropylharnstoff, Alkylenbisacrylamide, Alkylenglycoldi(meth)acrylate.

Das Endprodukt der "Popcorn"-Polymerisation ist ein schaumiges, krustiges, körniges Polymerisat mit Blumenkohl-artiger Struktur. Aufgrund ihrer meist starken Vernetzung sind Popcornpolymerisate in der Regel unlöslich und kaum quellbar.

Die unter (b) genannten Zuschlagsstoffe können sowohl allein als auch in Gemischen in dem Filterhilfsstoff enthalten sein.
Als Zuschlagsstoffe allein werden bevorzugt vernetztes Polyvinylpyrrolidon, TiO₂, KHCO₃, NaHCO₃, CaCO₃, Kieselgel, Kieselgur, Diatomeenerde oder Bentonit eingesetzt. Bevorzugt werden Gemische von vernetztem Polyvinylpolypyrrolidon (PVPP) mit TiO₂, NaHCO₃, KHCO₃ CaCO₃, Kieselgel, Kieselgur, Diatomeenerde oder Bentonit oder Gemische von NaHCO₃ oder KHCO₃ mit CaCO₃, TiO₂, Kieselgel, Kieselgur, Diatomeenerde oder Bentonit oder aber Gemische von TiO₂ mit NaHCO₃, KHCO₃, CaCO₃, Kieselgel, Kieselgur, Diatomeenerde oder Bentonit eingesetzt. Insbesonders bevorzugt wird vernetztes Polyvinylpolypyrrolidon eingesetzt.

Die eingesetzten Thermoplaste können nach an sich bekannten Verfahren hergestellt werden. Solche Verfahren sind beispielsweise in A. Echte; Handbuch der Technischen Polymerchemie; VCH, Weinheim, 1993 beschrieben.

Zur Herstellung der Polymerpulver werden die thermoplastischen Polymere und wenigstens ein weiterer Stoff in einem Extruder compoundiert.

Unter Compoundieren versteht man allgemein das Mischen eines Polymers mit wenigstens einem Zusatzstoff (Der Doppelschneckenextruder : Grundlagen- und Anwendungsgebiete, Herausg.: VDI-Gesellschaft Kunststofftechnik.-Düsseldorf : VDI-Verlag, 1995, Kapitel 7 und Aufbereiten von Polymeren mit neuartigen Eigenschaften, Herausg.: VDI-Gesellschaft Kunststofftechnik.-Düsseldorf : VDI-Verlag, 1995, S. 135ff*.)*. Das Aufbereiten von Polymeren durch Füllen und Verstärken wird z.B. bei den Polyolefinen und Polystyrol zur gezielten Verbesserung der Eigenschaften und Senken der Herstellkosten durchgeführt. Die Füllstoffe lassen sich gemäß ihrer Partikelgeometrie nach dem sog. Aspect Ratio unterscheiden. Bei einem Wert kleiner als zehn ist der Stoff ein reiner Füllstoff (Extender), erst bei höheren Werten wird üblicherweise eine Verstärkungswirkung erreicht. Dieser Effekt kann durch ausgeprägte Haftkräfte zwischen Zusatzstoff und Polymer verstärkt werden. Häufig eingesetzte Füllstoffe sind Calciumcarbonat (Kreide) und Talkum. Aufgrund der Lebensmittelzulassung hat mit Calciumcarbonat gefülltes Polypropylen auch für Lebensmittelverpackungen (Spritzguss, Tiefziehen) breite Anwendung gefunden. Weiterhin beschrieben ist das Füllen von Polypropylen mit Holzmehl für Platten, die im Automobilbau eingesetzt werden. Weiterhin üblich sind Glas (z.B. in Kugelform), Asbest, Silikate (z.B. Wollastonit), Glimmer, Spate und Graphit. Ein üblicher Anteil an Füllstoff beträgt 20-80 Masse-%, kann aber auch bis zu 95% betragen. Durch das Verstärken von thermoplastischen Kunststoffen mit Faserstoffen werden die mechanischen Eigenschaften, besonders die Steifigkeit und Härte des Kunststoffs erhöht. Üblicherweise werden als Faserstoffe Glasfasern, Kohlenstoffasern, Stahlfasern und Aramidfasern verwendet. Durch das Mischen wenigstens zweier Kunststoffe, dem Legieren, erhält man Polymere mit einem anderen Eigenschaftsprofil. Die Gemische können homogen, heterogen oder teilweise bzw. begrenzt verträglich sein.

Im Sinne der Erfindung werden die Polymerpulver in einem Extruder compoundiert.

Üblicherweise treten bei der Extrusion Temperaturen und Drücke auf, die neben der rein physikalischen Mischung eine chemische Umsetzung, d.h. eine chemische Veränderung der Einsatzkomponenten, ermöglichen können.

Unter dem Begriff der Filtration versteht man das Durchströmen eines porösen Filtermittels durch eine Suspension (Trübe), bestehend aus einer diskontinuierlichen Phase (dispergierte Stoffe) und einer kontinuierlichen Phase (Dispersionsmittel). Dabei werden Feststoffteilchen auf dem Filtermittel abgelagert und die filtrierte Flüssigkeit (Filtrat) verlässt das Filtermittel klar. Als äußere Kraft zur Überwindung des Strömungswiderstandes wirkt hierbei eine angelegte Druckdifferenz.

Man kann beim Filtrationsvorgang grundsätzlich verschieden Mechanismen der Feststoffabscheidung beobachten. Hauptsächlich handelt es sich hierbei um eine Oberflächen- oder Kuchenfiltration, Schichtenfiltration sowie Siebfiltration. Häufig hat man es mit einer Kombination aus wenigstens zwei Vorgängen zu tun.

Im Falle der Oberflächen- oder Kuchenfiltration kommen sogenannte Anschwemmfilter in verschiedenen Ausführungen für die Getränkefiltration zur Anwendung (Kunze, Wolfgang, Technologie Brauer und Mälzer, 7. Auflage, 1994, S. 372). Allen Anschwemmsystemen gemeinsam, werden die in der zu filtrierenden Flüssigkeit enthaltenen Feststoffe und auch die absichtlich zudosierten Feststoffe (Filterhilfsmittel) durch ein Filtermedium zurückgehalten, wobei sich ein Filterkuchen aufbaut. Dieser ist im Verlauf der Filtration ebenso wie das Filtermittel zu durchströmen. Eine solche Filtration wird auch als Anschwemmfiltration bezeichnet.

Unter den erfindungsgemäß zu filternden und/oder zu stabilisierenden Flüssigkeiten versteht man Fruchtsäfte oder Gärungsgetränke, wie Wein oder Bier. Insbesondere wird das erfindungsgemäße Verfahren zur Filtration und/oder Stabilisierung von Bier verwendet.

Die erfindungsgemäß bereitgestellten Filterhilfs- bzw. Stabilisierungsmittel zeichnen sich durch gute Benetzbarkeit mit Wasser und konstanter Durchflussrate bei gleichzeitig guter Filtrierwirkung aus.

Die Filterhilfsmittel werden nach dem Mischprozess durch Techniken der Granulierung des Schrotens und/oder Mahlens, bevorzugt durch eine Aufeinanderfolge von Granulierung und Mahlen zerkleinert. Bei der Temperaturführung eines Kaltmahlprozesses kann Wasser im Endprodukt verbleiben.

Die erhaltenen Pulver weisen eine mittlere Korngröße zwischen 1 und 1000 µm, bevorzugt zwischen 2 und 200 µm auf. Sie besitzen entweder eine regelmäßige oder unregelmäßige Struktur, die sphäroid oder nichtsphäroid sein kann. Bevorzugt sind die erhaltenen Pulver jedoch nichtsphäroid.

Die folgenden Beispiele sollen die Erfindung näher erläutern, ohne sie jedoch darauf einzuschränken.

### A) Herstellung von Polymerpulvern

Ein thermoplastisches Polymer und wenigstens ein weiterer Stoff (Gesamtmenge ca. 10 kg) werden in einem Extruder compoundiert. Das Extrudat wird im Wasserbad abgekühlt und granuliert. Das erhaltene Granulat wird in einer Pralltellermühle zerkleinert und mit einem Vibrationstaumelsieb abgesiebt.

Die Gewichtsverhältnisse, in denen das thermoplastische Polymer und entsprechende Zusatzstoffe (Stoff 1, evtl. auch Stoff 2) compoundiert worden sind, gibt die folgende Tabelle an. Hinter dem Gewichtsverhältnis ist in Klammern die Probenkennung angegeben.

| # | Thermoplastisches Polymer | Stoff 1 | Sroff 2 | Verhältnis Thermoplastisches Polymer : Stoff 1 (evtl.:Stoff 2) |
|---|---|---|---|---|
| 1 | Polypropylen | Kieselgur | - | 20:80 (1a);50:50 (2b); 80:20 (1c): 90:10 (1d) |
| 2 | Polypropylen | CaCO₃ | - | 60:40 (2a); 80:20 (2b) |
| 3 | Polypropylen | TiO₂ | - | 60:40 (3a): 80:20 (3b) |
| 4 | Polypropylen | PVPP | - | 60:40 (4a); 80:20 (4b) |
| 5 | Polypropylen | Kieselgel | - | 80:20 (5a) |
| 6 | Polypropylen | Bentonit | - | 80:20 (6a) |
| 7 | Polypropylen | PVPP | Kieselgel | 70:25:5(7a); 70:28:2 (7b) |
| 8 | Polyethylen | Kieselgur | - | 50:50 (8a); 80:20 (8b); 90:10 (8c) |
| 9 | Polyethylen | CaCO₃ | - | 60:40 (9a); 80:20 (9b) |
| 10 | Polyethylen | TiO₂ | - | 60:40 (10a); 80:20 (10b) |
| 11 | Polyethylen | PVPP | Kieselgel | 60:40 (11a); 80:20 (11b) |
| 12 | Polyethylen | Kieselgel | - | 80:20 (12a) |
| 13 | Polyethylen | Bentonit | - | 80:20 (13a) |
| 14 | Polyethylen | PVPP | Kieselgel | 70:25:5 (14a); 70:28:2 (14b) |
| 15 | Polyamid | Kieselgur | - | 20:80 (15a); 50:50 15b); 80:20 (15c); 90:10 (15d) |
| 16 | Polyamid | CaCO₃ | - | 60::40 (16a); 80:20 (16b) |
| 17 | Polyamid | TiO₂ | - | 60:40 (17a); 80:20 (17b) |

Es bedeuten dabei:
Polypropylen: Novolen, BASF
Polyethylen: Lupolen^{®}, BASF
Polyamid: Ultramid^{®}, BASF
Kieselgur: Kieselgur, Merck, CAS-Nr. 68855-54-9;
CaCO₃: Calciumcarbonat (gefällt,reinst), Merck, CAS-Nr. 471-34-1; TiO₂: Titandioxid (<325mesh, 99 %), Aldrich, CAS-Nr. 1317-70-0; PVPP: Divergan F, BASF, CAS-Nr. 9003-39-8;
NaHCO₃: Natriumhydrogencarbonat (reinst), Merck, CAS-Nr. 144-55-8; Kieselgel: Kieselgel, Merck, CAS-Nr. 63231-67-4;
Bentonit: Bentonit, Aldrich.

### B) Anwendungstests

### Filtration einer Standardtrübungslösung

Die Filtrationswirkung wird anhand der Klärung einer Standardtrübungslösung, d.i. eine Formazinlösung mit definierter Trübung, die dem Fachmann zur Charakterisierung von Filterhilfsmitteln für die Getränkeindustrie bekannt ist, in der Anschwemmfiltration beurteilt.

Die Kriterien für ein gutes Testergebnis sind Konstanthalten der Durchflussrate und des Anschwemmdrucks und die Filtrationswirkung, d.i. Klarheit des Filtrats:
der Anschwemmdruck vor und nach dem Filter hat bei gutem Durchfluss den gleichen Wert, d.h. Verstopfen des Filters ist nicht gegeben. Die Trübung wird nach einem Standardtest gemäß EBC bestimmt. Eine Flüssigkeit wird als klar beurteilt, wenn die Trübungswerte gemäß EBC < 1 sind.

Im folgenden werden Untersuchungen mit den in Abschnitt A beschriebenen Polymerproben beschrieben. Dabei wird bevorzugt die Mahlfraktion mit einer Teilchengröße kleiner als 100 µm eingesetzt.

Die im folgenden gezeigte Tabelle zeigt die Werte nach einem Durchflussvolumen von 5 1, 10 1 und 15 1 für ausgesuchte Proben.

Filtrationswirkung und Durchfluss

| Probe | 1c | 11b |
|---|---|---|
| EBC-Trübung^{1) 2)} nach einem Durchflussvolumen von | | |
| 5 l | 2,51 | 1,78 |
| 10 l | 1,41 | 1,25 |
| 15 l | 0,92 | 0,76 |
| Durchflussrate³⁾ (1 h⁻¹) | 40⁴) | 40⁴) |
| Anschwemmdruck⁵) (bar) (vor / nach Filterkörper) | 1, 5⁴⁾ /1 5⁴⁾ 1, | 5⁴⁾ /1 5⁴⁾ |

| | | |
|---|---|---|
| ¹⁾ EBC: European Brewery Convention. ²⁾ Der Nullwert, d.i. der Wert der Standardtrübungslösung beträgt 20 EBC. ³⁾ Die Durchflussrate ohne Filterhilfsmittel beträgt 40 1 h⁻¹. ⁴⁾ Der Messwert bleibt während der gesamten Dauer der Filtration konstant. ⁵⁾ Der Anschwemmdruck der reinen Flüssigkeit, d.h. ohne Filterhilfsmittel beträgt 1,5 bar. | | |

## Patentansprüche

1. Verfahren zur Filtration und/oder Stabilisierung einer wässrigen Flüssigkeit, **dadurch gekennzeichnet, dass** man ein Polymerpulver als Filterhilfs- bzw. Stabilisierungsmittel enthaltend
(a) 20 bis 95 Gew.-% mindestens eines thermoplastischen Polymers aus der Gruppe der Polyolefine und Polyamide,
(b) 80-5 Gew.-% mindestens eines weiteren Stoffes, ausgewählt aus der Gruppe der Silikate, Carbonate, Oxide, Kieselgel, Kieselgur, Diatomeenerde, der vernetzten Polyvinyllactame oder Gemischen davon
als Filterhilfs- bzw. Stabilisierungsmittel einsetzt, wobei die Polymerpulver durch Compoundieren der thermoplastischen Polymere (a) und der weiteren Stoffe (b) in einem Extruder und anschließendem Zerkleinern erhalten werden.

2. Verfahren gemäß Anspruch 1, **dadurch gekennzeichnet, dass** neben der Filtration auch eine gleichzeitige Stabilisierung des zu filternden Mediums stattfindet.

3. Verfahren gemäß einem der Ansprüche 1 oder 2, **dadurch gekennzeichnet, dass** bei der Filtration die Technik der Anschwemmfiltration verwendet wird.

4. Verfahren gemäß einem der Ansprüche 1 bis 3, **dadurch gekennzeichnet, dass** es sich bei der wässrigen Flüssigkeit um eine Flüssigkeit ausgewählt aus der Gruppe der Fruchtsaft- oder Gärungsgetränke handelt.

5. Verfahren gemäß einem der Ansprüche 1 bis 4, **dadurch gekennzeichnet, dass** es sich bei der wässrigen Flüssigkeit um Bier handelt.

6. Verfahren gemäß einem der Ansprüche 1 bis 5, **dadurch gekennzeichnet, dass** die eingesetzten Polymerpulver eine mittlere Korngröße zwischen 1 und 1000 µm haben.

7. Verfahren gemäß einem der Ansprüche 1 bis 6, **dadurch gekennzeichnet, dass** die Teilchen der eingesetzten Polymerpulver nicht sphäroid sind.

8. Verfahren gemäß einem der Ansprüche 1 bis 7, **dadurch gekennzeichnet, dass** der unter (b) aufgeführte Stoff ausgewählt ist aus der Gruppe der Alkali- oder Erdalkalicarbonate, der Alkali- oder Erdalkalihydrogencarbonate, der Oxide oder Mischoxide der 4. Nebengruppe oder der 3. Hauptgruppe, der vernetzten Polyvinyllactarne oder Gemischen davon.

9. Verfahren gemäß einem der Ansprüche 1 bis 8, **dadurch gekennzeichnet, dass** der unter (b) aufgeführte Stoff vernetztes Polyvinylpolypyrrolidon (PVPP) ist.

10. Verfahren gemäß einem der Ansprüche 1 bis 9, **dadurch gekennzeichnet dass** der unter (b) aufgeführte Stoff ausgewählt ist aus der Gruppe vernetztes Polyvinylpolypyrrolidon, TiO₂, NaHCO₃, KHCO₃, CaCO₃ , Kieselgel, Kieselgur, Diatomeenerde, Bentonit oder Gemischen davon.

## Claims

1. A process for filtering and/or stabilizing an aqueous liquid, which comprises using as filter aid or stabilizer a polymer powder comprising
(a) from 20 to 95% by weight of at least one thermoplastic polymer from the group consisting of polyolefins and polyamides,
(b) 80-5% by weight of at least one further substance selected from the group consisting of silicates, carbonates, oxides, silica gel, kieselguht, diatomaceous earth, crosslinked polyvinyllactams or mixtures thereof, the polymer powders being obtained by compounding the thermoplastic polymers (a) and the further substances (b) in an extruder and subsequent comminution.

2. The process according to claim 1, wherein, in addition to the filtration, simultaneous stabilization of the medium to be filtered takes place.

3. The process according to either of claims 1 and 2, wherein, during the filtration, the precoat filtration technique is used.

4. The process according to one of claims 1 to 3, wherein the aqueous liquid is a liquid selected from the group consisting of fruit juice drinks or fermented beverages.

5. The process according to one of claims 1 to 4, wherein the aqueous liquid is beer.

6. The process according to one of claims 1 to 5, wherein the polymer powders used have a mean particle size of from 1 to 1000 µm.

7. The process according to one of claims 1 to 6, wherein the particles of the polymer powders used are not spheroidal.

8. The process according to one of claims 1 to 7, wherein the substance set forth under (b) is selected from the group consisting of alkali metal carbonates or alkaline earth metal carbonates, alkali metal hydrogencarbonates or alkaline earth metal hydrogencarbonates, the oxides or mixed oxides of subgroup 4 or main group 3, crosslinked polyvinyllactams or mixtures thereof.

9. The process according to one of claims 1 to 8, wherein the substance set forth under (b) is crosslinked polyvinylpolypyrrolidone (PVPP).

10. The process according to one of claims 1 to 9, wherein the substance set forth under (b) is selected from the group consisting of crosslinked polyvinylpolypyrrolidone, TiO₂, NaHCO₃, KHCO₃, CaCO₃, silica gel, kieselguhr, diatomaceous earth, bentonite or mixtures thereof.

## Revendications

1. Procédé de filtration et / ou de stabilisation d'un liquide aqueux, **caractérisé en ce que** l'on met en oeuvre une poudre de polymère, en tant qu'adjuvants de filtration ou qu'agents de stabilisation, contenant
(a) de 20 à 95 % en poids d'au moins un polymère thermoplastique du groupe des polyoléfines et des polyamides,
(b) de 80 à 5 % en poids d'au moins une autre substance choisie dans le groupe formé par des silicates, des carbonates, des oxydes, du gel de silice, de la terre d'infusoires, de la terre de diatomées, des polyvinyllactames réticulés ou leurs mélanges,
où les poudres de polymère est obtenue par mélangeage des polymères thermoplastiques (a) et de l'autre substance (b) dans une extrudeuse, et broyage subséquent.

2. Procédé suivant la revendication 1, **caractérisé en ce que**, outre la filtration, une stabilisation simultanée du milieu à filtrer a également lieu.

3. Procédé suivant l'une quelconque des revendications 1 ou 2, **caractérisé en ce que** l'on utilise, lors de la filtration, la technique de filtration à couches.

4. Procédé suivant l'une quelconque des revendications 1 à 3, **caractérisé en ce que** le liquide aqueux est un liquide choisi dans le groupe formé par des boissons à base de jus de fruits ou fermentées.

5. Procédé suivant l'une quelconque des revendications 1 à 4, **caractérisé en ce que** le liquide aqueux est de la bière.

6. Procédé suivant l'une quelconque des revendications 1 à 5, **caractérisé en ce que** les poudres de polymère mises en oeuvre possèdent une taille moyenne de particules de 1 à 1000 µm.

7. Procédé suivant l'une quelconque des revendications 1 à 6, **caractérisé en ce que** les particules des poudres de polymère mises en oeuvre ne sont pas sphéroides.

8. Procédé suivant l'une quelconque des revendications 1 à 7, **caractérisé en ce que** la substance mentionnée sous (b) est choisie dans le groupe formé par les carbonates de métaux alcalins ou alcalino-terreux, les hydrogénocarbonatés de métaux alcalins ou alcalino-terreux, les oxydes ou les oxydes mixtes du 4^{ème} sous-groupe ou du 3^{éme} groupe principal, les polyvinyllactames réticulés ou leurs mélanges.

9. Procédé suivant l'une quelconque des revendications 1 à 8, **caractérisé en ce que** la substance mentionnée sous (b) est de la polyvinylpolypyrrolidone (PVPP) réticulée.

10. Procédé suivant l'une quelconque des revendications 1 à 9, **caractérisé en ce que** la substance mentionnée sous (b) est choisie dans le groupe formé par de la polyvinylpolypyrrolidone réticulée, du TiO₂, du NaHCO₃, du KHCO₃, du CaCO₃, du gel de silice, de la terre d'infusoires, de la terre de diatomées, de la bentonite ou leurs mélanges.
